# EUROPEAN PATENT SPECIFICATION

(11) **EP 1 228 926 B1**
(45) Date of publication and mention of the grant of the patent: **19.01.2005**
(21) Application number: 02002413.9
(22) Date of filing: 31.01.2002
(51) Int. Cl.: B60R 16/02

(54) **Improved clamp, in particular for harnessing automotive electric wires**
Klemme, insbesondere zur Herstellung elektrischer Kraftfahrzeugkabelbäume
Collier, en particulier pour former des faisceaux de cables électriques de véhicule

(30) Priority: 01.02.2001 IT MI010186
(43) Date of publication of application: 07.08.2002
(73) Proprietor: ITW Automotive Italia S.r.l., 10156 Torino (IT)
(72) Inventor: Girodo, Franco, 10010 Tavagnasco (IT)
(74) Representative: Plebani, Rinaldo

(56) References cited:
- US-A- 4 708 306
- US-A- 5 337 983
- US-A- 5 505 411

## Description

The present invention relates to an improved clamp, in particular for harnessing automotive electric wires or similar.

As is known, from e.g. US 5 337 983 A to fix electric wire harnesses to vehicle bodies, clamps are used comprising a binding member, which is fastened about the harness and normally defined by a tongue looped and fastened inside a seat by ratchet-type retaining means, so as to effectively bind harnesses of different diameters; and a fastening member formed in one piece with the binding member and which clicks on to a support on the vehicle body. The harness is preassembled with a number of clamps fitted to it in predetermined positions substantially corresponding to those of the supports on the vehicle body, and is installed and fixed to the vehicle body by simply pressing the fastening member of each clamp into a corresponding support on the vehicle body.

The supports currently used on vehicles are of two types: threaded pins, as shown in the above document US 5 337 983 A normally projection welded to the vehicle body and for receiving ratchet-type fastening members or so-called "tuckers"; and straightforward holes for receiving click-in expansion pins as e.g. shown in US 4 708 306 A. Since the same vehicle may comprise both types of support, fitters must work with two different types of clamp, each for connection to a specific type of support. Moreover, the clamps are fitted to the harness in strict given positions, each corresponding to that of the respective type of support, which obviously creates difficulties and increases wiring cost. Also in view of the fact that, once fastened in position on the harness, clamps of the above type can be removed but cannot be used again. That is, once fastened, the surplus part of the tongue is cut off, and, in any case, the ratchet-type means retaining the tongue prevent it from being removed other than by being pulled or cut off. Such problems are further compounded by the supports on the vehicle body, due to the machining tolerances involved, not always being located exactly to design.

Similar problems are also encountered when fastening other similar elements, e.g. hoses, to vehicle bodies, and which are only partly reduced by click-on binding members defined by clips, as opposed to flexible tongues, normally being used in such cases.

It is therefore an object of the present invention to eliminate the aforementioned drawbacks by providing a clamp which can be used indifferently with both types of currently used supports, as well as any other types made available in the future; which permits a limited amount of movement of the fastening member with respect to the position of the clamp on the harness or hose for installation, so as to compensate for any error in the position of either the clamp or the support on the vehicle body; and which at the same time is cheap to produce, compact, and extremely easy to assemble.

According to the present invention, there is provided a clamp, in particular for harnessing electric wires to a vehicle body, comprising a binding member, and a fastening member for connection to a support; characterized in that the fastening member is formed separately and independently of the binding member, and comprises a slide member; and first and second fastening means carried, oppositely oriented, by the slide member, and which fit to supports of a different first and second type respectively; and in that the binding member has a head which clicks inside a seat on the slide member so that the binding member and the fastening member are connected mutually to rotate with respect to each other about an axis of rotation substantially perpendicular to the orientation of said first and second fastening means.

The same clamp can therefore be connected indifferently to two different types of support by simply positioning the fastening member - by rotation with respect to the binding member, and with the binding member already in position, e.g. binding an electric wire harness - so that the first or second fastening means are selectively positioned facing the support. By means of the above structure, it is also possible, in a preferred embodiment, to slide the fastening member, with respect to the binding member, crosswise to said axis of rotation, so as to compensate for any error in the position of either the clamp on the elements for binding - e.g. electric wires, which may thus be harnessed cheaply - or the supports on the vehicle body. Finally, the two component parts of the clamp can be injection molded easily from plastic material and then fitted together to form the clamp according to the invention, which, from that point on, is a monolithic member, while still permitting relative rotation and, possibly also, relative slide of the fastening and binding members.

A non-limiting embodiment of the invention will be described by way of example with reference to the accompanying drawings, in which:
Figure 1 shows a top plan view of an improved clamp in accordance with the invention;
Figure 2 shows a side view of the Figure 1 clamp in a first work position;
Figure 3 shows a section along line III-III of the Figure 1 clamp;
Figures 4 and 5 show a schematic, larger-scale, exploded axonometric view of two construction details of the Figure 1 clamp;
Figure 6 shows a side view, rotated 180° and from the opposite side', of a detail of the Figure 2 clamp in a second work position.

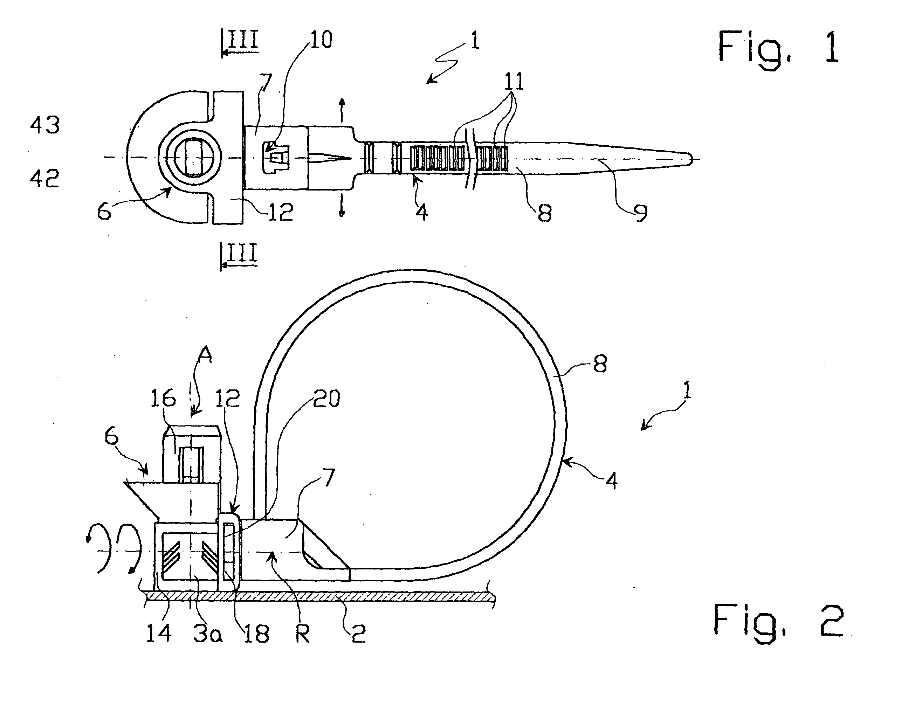

With reference to Figures 1 to 6, number 1 indicates as a whole a clamp suitable, in the non-limiting embodiment shown, for harnessing and rapidly fitting known electric wires (not shown) to a vehicle body 2 (not shown) by connection to known supports 3, two different types of which are shown in Figures 2 and 6: a threaded pin or "tucker" 3a projection welded to body 2; and a hole 3b formed through body 2.

Clamp 1 comprises a binding member 4 for binding the elements to be fitted to body 2 - in the example shown, a harness of said electric wires (not shown); and a fastening member 6 for connection to a respective support 3a or 3b. In the non-limiting embodiment shown, binding member 4 comprises a known box body or turret 7 (Figures 1, 2, 5) having a known projecting flexible tongue 8, a free end 9 of which slides inside a seat 10 formed through turret 7 and having known ratchet-type retaining means (not shown) inside for engaging respective openings 11, formed through and along most of the length of tongue 8, to lock the tongue in a loop (Figure 2) binding the harness.

According to the invention, fastening member 6 is formed separately and independently from binding member 4, e.g. both injection molded from synthetic plastic resin, and comprises a slide member 12; and first and second fastening means 14 and 16 - both known and therefore not described in detail - designed to fit to respective different supports: in particular, means 14 to a pin 3a, and means 16 inside a hole 3b.

According to the invention, fastening means 14 and 16 - which, both being fitted to circularly symmetrical supports (hole or pin), are both axially symmetrical - are carried, oppositely oriented, by slide member 12. More specifically, fastening means 14, 16 are oppositely oriented along the same work axis A; and slide member 12 is formed integrally with and alongside fastening means 14, and is defined by a box body (substantially parallelepiped-shaped in the example shown) having a through seat 18 oriented crosswise to work axis A of fastening means 14, 16.

According to the invention, binding member 4, unlike similar known binding members, has a head 20 which, in use, clicks inside seat 18 on slide member 12 (Figures 1-3 and 6) so that binding member 4 and fastening member 6 are connected to each other and rotate, with respect to each other and in the direction of the arrows in Figures 2 and 6, about an axis R substantially perpendicular to the orientation of fastening means 14, 16, i.e. to axis A.

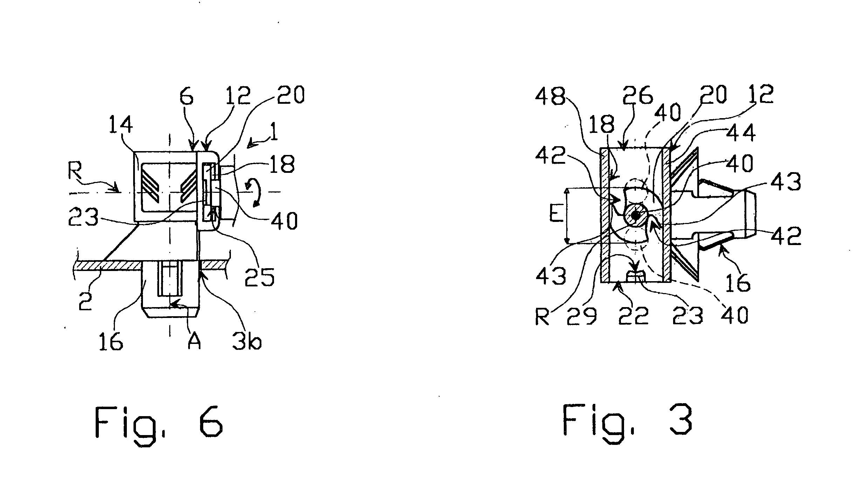

According to a further characteristic of the invention, head 20 of binding member 4 fits inside seat 18 on slide member 12, so that fastening member 6 as a whole is connected in relatively sliding manner to binding member 4 with a predetermined travel E (Figure 3) - in the example shown, in a direction crosswise to axis of rotation R.

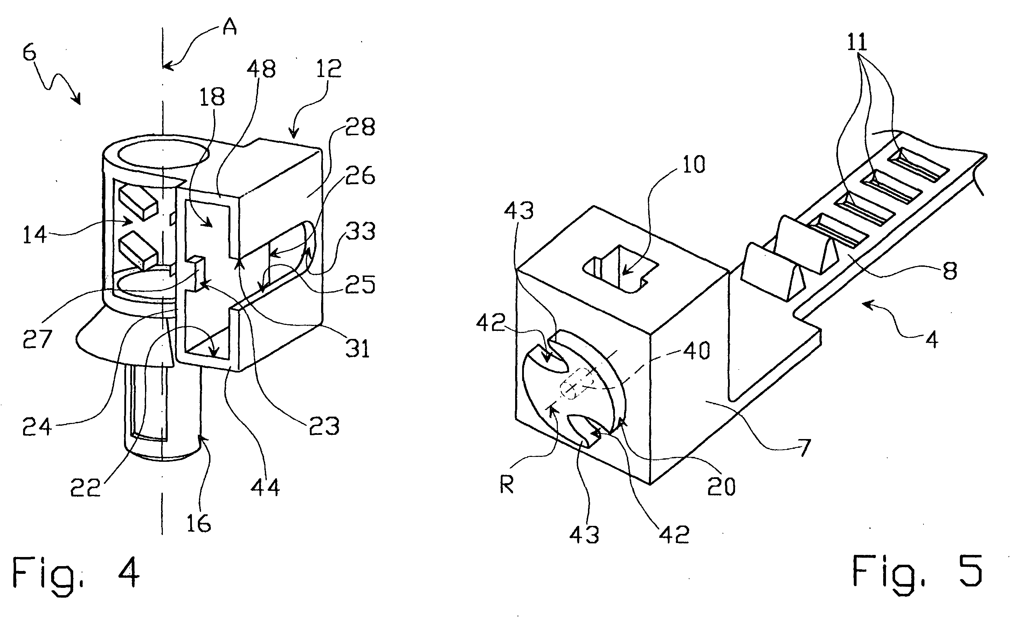

The above characteristics are achieved by virtue of the particular design of seat 18 and head 20. In the non-limiting example shown, for example, seat 18 comprises a first inlet end 22, and a second inlet end 26 opposite inlet end 22; inlet end 22 has stop means defined by at least one stop tooth 23 integral with a first lateral wall 24 of slide member 12 (Figure 4) adjacent to fastening means 14, 16; and a second lateral wall 28 of slide member 12, facing and opposite wall 24 and fastening means 14, 16, has a through slot 25 oriented parallel to seat 18.

Tooth 23 is defined, outwards of seat 18, by an inclined lead-in surface 27, and, inwards of seat 18 and towards inlet end 26, by a curved stop surface 29; and slot 25 is defined between an open end 31 at inlet end 22, and a curved opposite end stop surface 33 (Figure 4) oppositely oriented with respect to surface 29 and located at inlet end 26.

More specifically, stop surfaces 29 and 33 are cylindrical surfaces, the axes of which are parallel to axis of rotation R.

In conjunction with the above, head 20 of binding member 4 projects frontwards on a cylindrical pin 40 coaxial with axis R and also projecting frontwards from turret 7, on the opposite side to tongue 8. As shown in Figure 6, pin 40 fits through slot 25 to house head 20 inside seat 18, past stop surface 29 of tooth 23. This is done, when assembling the separate members 4 and 6, by simply inserting head 20 through inlet end 22, and pin 40 through end 31 of slot 25, and by applying force to click them elastically past tooth 23, by virtue of lead-in surface 27, and also by virtue of head 20 (Figures 3 and 5) being in the form of a cylindrical disk coaxial with pin 40 and having at least two opposite, curved, substantially chordal openings 42 extending inwards towards pin 40 and defining, on head 20, respective circumferential, radially flexible fingers 43 oriented in a direction substantially parallel to the plane of tongue 8.

Head 20 has a diameter larger than that of pin 40 and substantially equal to the distance between a third and fourth lateral wall of slide member 12, indicated 44 and 48 respectively and perpendicular to lateral walls 24 and 28. Consequently, once head 20 is inserted inside seat 18, fingers 43 cooperate with walls 44 and 48 to define, as shown in Figures 2 and 6, respective opposite rotation-stop positions of fastening member 6 with respect to binding member 4.

Finally, the length of slot 25 is so selected that the distance between stop surfaces 29 and 33, measured parallel to slot 25, equals half the diameter of head 20 plus the desired travel E, crosswise to axis R, of fastening member 6 with respect to binding member 4. This allows pin 40, in use, to move along slot 25 between two stop positions shown schematically by the dash lines in Figure 3 - a first position in which head 20 rests against surface 29, and a second position in which pin 40 rests against surface 33 - and so allows head 20 to slide laterally inside seat 18 to the full extent of travel E.

In a variation not shown, the clamp according to the invention may comprise more than two different fastening means; in which case, head 20 comprises more than two fingers 43, and seat 18 is designed accordingly to define more than two rotation-stop positions of head 20.

Similarly, the binding member may be formed differently, while still preserving the advantages described.

## Claims

1. A clamp (1), comprising a binding member (4), and a fastening member (6) for connection to a support (3a,3b); the fastening member (6) is formed separately and independently of the binding member (4), **characterized in that** it further comprises a slide member (12); and first (14) and second (16) fastening means carried, oppositely oriented, by the slide member (12), and which fit to supports (3a, 3b) of a different first and second type respectively; and **in that** the binding member (4) has a head (20) which clicks inside a seat (18) on the slide member (12) so that the binding member (4) and the fastening member (6) are connected mutually to rotate with respect to each other about an axis of rotation (R) substantially perpendicular to the orientation of said first and second fastening means (14, 16).

2. A clamp (1) as claimed in Claim 1, **characterized in that** said head (20) of the binding member (4) fits inside said seat (18) on the slide member (12), so that the fastening member (6) slides relatively with respect to the binding member (4) in a direction crosswise to said axis of rotation (R) and with a predetermined travel (E).

3. A clamp (1) as claimed in Claim 2, **characterized in that** said first and second fastening means (14, 16) are oppositely oriented along the same work axis (A); said slide member (12) being formed integrally with and alongside one (14) of said first and second fastening means, and being defined by a box body, through which said seat (18) extends crosswise to said work axis (A); a first inlet end (22) of said seat (18) having first stop means (23) carried by a first lateral wall (24) of said slide member (12) adjacent to said first and second fastening means (14, 16).

4. A clamp (1) as claimed in Claim 3, **characterized in that** said first stop means are defined by at least one stop tooth (23) defined, outwards of said seat (18), by an inclined lead-in surface (27), and, inwards of said seat (18) and towards a second inlet end (26) of said seat opposite the first inlet end (22), by a first stop surface (29); a second lateral wall (28) of said slide member (12), facing the first and on the opposite side to said first and second fastening means (14, 16), having a through slot (25) oriented parallel to said seat (18) and having an open end (31) at said first inlet end (22) of the seat, and a second stop surface (33), opposite the first, at the opposite end and towards said second inlet end (26) of the seat.

5. A clamp (1) as claimed in Claim 4, **characterized in that** said first and said second stop surface (29, 33) are cylindrical surfaces, the axes of which are parallel to said axis of rotation (R).

6. A clamp (1) as claimed in Claim 5, **characterized in that** said head (20) of said binding member (4) projects frontwards on a cylindrical pin (40) coaxial with said axis of rotation (R) and also projecting frontwards from said binding member (4); said pin (40) fitting through said slot (25) to house said head (20) inside said seat (18) of the slide member (12), past said first stop surface (29).

7. A clamp (1) as claimed in Claim 6, **characterized in that** said head (20) is in the form of a cylindrical disk coaxial with said pin (40) and having at least two opposite, curved, substantially chordal openings (42) extending inwards towards said pin (40); and **in that** said head (20) has a diameter larger than that of said pin (40) and substantially equal to the distance between a third and fourth lateral wall (44, 48) of the slide member (12), perpendicular to said first and said second lateral wall (24, 28) of the slide member.

8. A clamp (1) as claimed in Claim 7, **characterized in that**, on the opposite side to said head (20), said binding member (4) comprises a projecting flexible tongue (8), a free end (9) of which slides inside a through seat (10) formed through the binding member (4) and having ratchet-type retaining means; said substantially chordal openings (42) in the head (20) defining, on the head, respective circumferential, radially flexible fingers (43) oriented in a direction substantially parallel to the plane of said tongue (8), and which cooperate with said third and said fourth lateral wall (44, 48) of the slide member (12) to define respective opposite rotation-stop positions of the fastening member (6) with respect to the binding member (4).

9. A clamp (1) as claimed in Claim 8, **characterized in that** the distance between said first and said second stop surface (29, 33), measured parallel to said slot (25), equals half the diameter of said head (20) plus said travel (E), crosswise to said axis of rotation (R), of the fastening member (6) with respect to the binding member (4).

## Patentansprüche

1. Klemme (1), aufweisend ein Bindeelement (4) und ein Befestigungselement (6) zur Verbindung mit einem Halter (3a, 3b); wobei das Befestigungselement (6) separat und unabhängig vom Bindelement (4) gebildet ist,
**dadurch gekennzeichnet, dass** sie ferner ein Gleitelement (12) und erste (14) und zweite (16) Befestigungsmittel aufweist, die entgegengesetzt ausgerichtet vom Gleitelement (12) getragen werden und an die Halter (3a, 3b) eines unterschiedlichen ersten bzw. zweiten Typs passen; und dass das Bindeelement (4) einen Kopf (20) aufweist, der innerhalb eines Sitzes (18) am Gleitelement (12) einrastet, so dass das Bindelement (4) und das Befestigungselement (6) wechselseitig miteinander verbunden sind, um mit Bezug aufeinander um eine Rotationsachse (R) zu rotieren, die im wesentlichen senkrecht ist zur Ausrichtung des ersten und zweiten Befestigungsmittels (14, 16).

2. Klemme (1) nach Anspruch 1, **dadurch gekennzeichnet, dass** der Kopf (20) des Bindelements (4) in den Sitz (18) am Gleitelement (12) passt, so dass das Befestigungselement (6) relativ mit Bezug auf das Bindeelement (4) in einer Richtung quer zur Rotationsachse (R) und mit einem vorbestimmten Bewegungsweg (E) gleitet.

3. Klemme (1) nach Anspruch 2, **dadurch gekennzeichnet, dass** das erste und zweite Befestigungsmittel (14, 16) entgegengesetzt längs der gleichen Arbeitsachse (A) ausgerichtet sind; dass das Gleitelement (12) integral und längs eines (14) des ersten und zweiten Befestigungsmittels gebildet ist und durch einen Kastenkörper definiert ist, durch welchen der Sitz (18) sich quer zur Arbeitsachse (A) hindurcherstreckt; dass ein erstes Einlassende (22) des Sitzes (18) erste Anschlagsmittel (23) aufweist, die durch eine erste seitliche Wand (24) des Gleitelements (12) zum ersten und zweiten Befestigungsmittel (14, 16) benachbart getragen werden.

4. Klemme (1) nach Anspruch 3, **dadurch gekennzeichnet, dass** die ersten Anschlagsmittel durch mindestens einen Anschlagszahn (23) definiert sind, der auswärts von dem Sitz (18) durch eine geneigte Einführfläche (27) und innerhalb des Sitzes (18) und zu einem zweiten Einlassende (26) des Sitzes gegenüber dem ersten Einlassende (22) durch eine erste Anschlagfläche (29) definiert ist; eine zweite seitliche Wand (28) des Gleitelements (12) vorgesehen ist, die der ersten gegenüberliegt und auf der von den ersten und zweiten Befestigungsmitteln (14, 16) abgewandten Seite einen Durchgangschlitz (25) aufweist, der parallel zum Sitz (18) ausgerichtet ist und ein offenes Ende (31) am ersten Einlassende (22) des Sitzes und eine zweite Anschlagfläche (33) gegenüber der ersten am entgegengesetzten Ende und zum zweiten Einlassende (26) des Sitzes hin aufweist.

5. Klemme (1) nach Anspruch 4, **dadurch gekennzeichnet, dass** die erste und zweite Anschlagfläche (29, 33) zylindrische Flächen sind, wobei ihre Achsen parallel zur Rotationsachse (R) sind.

6. Klemme (1) nach Anspruch 5, **dadurch gekennzeichnet, dass** der Kopf (20) des Bindeelements (4) nach vorne an einem zylindrischen Stift (40) koaxial zur Rotationsachse (R) hervorragt und auch vom Bindelement (4) nach vorne ragt; wobei der Stift (40) durch den Schlitz (25) passt, um den Kopf (20) innerhalb des Sitzes (18) des Gleitelements (12) an der ersten Anschlagfläche (29) vorbei aufzunehmen.

7. Klemme (1) nach Anspruch 6, **dadurch gekennzeichnet, dass** der Kopf (20) in Form einer zylindrischen Scheibe ist, die zum Stift (40) koaxial ist und mindestens zwei gegenüberliegende gewölbte, im wesentlichen sehnenförmige Öffnungen (42) aufweist, die sich innen zum Stift (40) hin erstrecken; und dass
der Kopf (20) einen Durchmesser hat, der größer ist als der des Stiftes (40) und im wesentlichen gleich dem Abstand zwischen einer dritten und vierten seitlichen Wand (44, 48) des Gleitelements (12) senkrecht zur ersten und zweiten seitlichen Wand (24, 28) des Gleitelements ist.

8. Klemme (1) nach Anspruch (7), **dadurch gekennzeichnet, dass** das Bindelement (4) auf der zum Kopf (20) gegenüberliegenden Seite eine herausragende flexible Zunge (8) aufweist, von welcher ein freies Ende (9) innerhalb eines Durchgangssitzes (10) gleitet, der durch das Bindelement (4) gebildet ist und klinkenartige Haltemittel aufweist; wobei die im wesentlichen sehnenförmigen Öffnungen (42) im Kopf (20) am Kopf jeweilige radial flexible Umfangsfinger (43) definieren, die in einer Richtung im wesentlichen parallel zur Ebene der Zunge (8) ausgerichtet sind und die mit der dritten und vierten seitlichen Wand (44, 48) des Gleitelements (12) zusammenwirken, um jeweilige gegenüberliegende Rotations-Anschlagspositionen des Befestigungselements (6) mit Bezug auf das Bindeelement (4) zu definieren.

9. Klemme (1) nach Anspruch 8, **dadurch gekennzeichnet, dass** der Abstand zwischen der ersten und zweiten Anschlagsfläche (29, 33), parallel zum Schlitz (25) gemessen, gleich der Hälfte des Durchmessers des Kopfes (20) plus dem Bewegungsweg (E) quer zur Rotationsachse (R) des Befestigungselements (6) mit Bezug auf das Bindelement (4) ist.

## Revendications

1. Bride (1) comprenant un élément de liage (4), et un élément de fixation (6) pour connexion à un support (3a, 3b) ; l'élément de fixation (6) étant formé séparément et indépendamment de l'élément de liage (4), **caractérisée en ce que** la bride comprend également un élément formant curseur (12) ; et des premier (14) et deuxième (16) moyens de fixation supportés, en ayant une orientation opposée, par l'élément formant curseur (12), et qui s'emboîtent avec des supports (3a, 3b) d'un premier type et d'un deuxième type, respectivement ; et **en ce que** l'élément de liage (4) comporte une tête (20) qui s'encliquette dans un siège (18) sur l'élément formant curseur (12) de telle sorte que l'élément de liage (4) et l'élément de fixation (6) sont reliés mutuellement pour tourner l'un par rapport à l'autre autour d'un axe de rotation (R) sensiblement perpendiculaire à l'orientation desdits premier et deuxième moyens de fixation (14, 16).

2. Bride (1) selon la revendication 1, **caractérisée en ce que** ladite tête (20) de l'élément de liage (4) s'emboîte dans ledit siège (18) sur l'élément formant curseur (12), de telle sorte que l'élément de fixation (6) glisse relativement par rapport à l'élément de liage (4) dans une direction transversale audit axe de rotation (R) et avec un déplacement prédéterminé (E).

3. Bride (1) selon la revendication 2, **caractérisée en ce que** lesdits premier et deuxième moyens de fixation (14, 16) ont une orientation opposée le long du même axe de fonctionnement (A) ; ledit élément formant curseur (12) étant formé d'un seul tenant avec, et le long de, un (14) desdits premier et deuxième moyens de fixation, et étant défini par un corps de type boîtier, à travers lequel ledit siège (18) s'étend transversalement audit axe de fonctionnement (A) ; une première extrémité d'entrée (22) dudit siège (18) comportant un premier moyen d'arrêt (23) supporté par une première paroi latérale (24) dudit élément formant curseur (12) adjacente auxdits premier et deuxième moyens de fixation (14, 16).

4. Bride (1) selon la revendication 3, **caractérisée en ce que** ledit premier moyen d'arrêt est défini par au moins une dent d'arrêt (23) définie, vers l'extérieur dudit siège (18), par une surface d'introduction inclinée (27), et, vers l'intérieur dudit siège (18) et vers une deuxième extrémité d'entrée (26) dudit siège à l'opposé de la première extrémité d'entrée (22), par une première surface d'arrêt (29) ; une deuxième paroi latérale (28) dudit élément formant curseur (12), donnant sur la première paroi latérale et sur le côté à l'opposé desdits premier et deuxième moyens de fixation (14, 16), comportant une fente de passage (25) orientée parallèlement audit siège (18) et comportant une extrémité ouverte (31) à ladite première extrémité d'entrée (22) du siège, et une deuxième surface d'arrêt (33), à l'opposé de la première surface d'arrêt, à l'extrémité opposée et vers ladite deuxième extrémité d'entrée (26) du siège.

5. Bride (1) selon la revendication 4, **caractérisée en ce que** lesdites première et deuxième surfaces d'arrêt (29, 33) sont des surfaces cylindriques, dont l'axe est parallèle audit axe de rotation (R).

6. Bride (1) selon la revendication 5, **caractérisée en ce que** ladite tête (20) dudit élément de liage (4) est en saillie vers l'avant sur une goupille cylindrique (40) coaxiale audit axe de rotation (R) et est également en saillie vers l'avant depuis ledit élément de liage (4) ; ladite goupille (40) s'ajustant dans ladite fente (25) pour loger ladite tête (20) dans ledit siège (18) de l'élément formant curseur (12), au-delà de ladite première surface d'arrêt (29).

7. Bride (1) selon la revendication 6, **caractérisée en ce que** ladite tête (20) a la forme d'un disque cylindrique coaxial à ladite goupille (40) et comportant au moins deux ouvertures (42) opposées, incurvées, sensiblement à la corde, s'étendant vers l'intérieur vers ladite goupille (40) ; et **en ce que** ladite tête (20) a un diamètre supérieur à celui de ladite goupille (40) et sensiblement égal à la distance entre des troisième et quatrième parois latérales (44, 48) de l'élément formant curseur (12), perpendiculaires auxdites première et deuxième parois latérales (24, 28) de l'élément formant curseur.

8. Bride (1) selon la revendication 7, **caractérisée en ce que**, sur le côté à l'opposé de ladite tête (20), ledit élément de liage (4) comprend une langue flexible en saillie (8), une extrémité libre (9) de laquelle glisse à l'intérieur d'un siège débouchant (10) formé à travers l'élément de liage (4) et comportant un moyen de retenue du type cliquet ; lesdites ouvertures sensiblement à la corde (42) dans la tête (20) définissant, sur la tête, des doigts (43) flexibles radialement, circonférentiels, respectifs, orientés dans une direction sensiblement parallèle au plan de ladite languette (8), et qui coopèrent avec lesdites troisième et quatrième parois latérales (44, 48) de l'élément formant curseur (12) pour définir des positions d'arrêt de rotation opposées, respectives, de l'élément de fixation (6) par rapport à l'élément de liage (4).

9. Bride (1) selon la revendication 8, **caractérisée en ce que** la distance entre lesdites première et deuxième surfaces d'arrêt (29, 33), mesurée parallèlement à ladite fente (25), est égale à la moitié du diamètre de ladite tête (20) plus ledit déplacement (E), transversalement audit axe de rotation (R), de l'élément de fixation (6) par rapport à l'élément de liage (4).
